# DEMANDE DE BREVET EUROPEEN

(11) **EP 0 664 946 A1**
(43) Date de publication de la demande: **02.08.1995**
(21) Numéro de dépôt: 95440003.2
(22) Date de dépôt: 27.01.1995
(51) Int. Cl.: A01D 43/08

(54) **Dispositif destiné à être combiné avec une barre à disques en vue du hachage et/ou du broyage des végétaux. Machine de coupe à barre à disques équipée d'un tel dispositif**

(30) Priorité: 27.01.1994 FR 9401052
(71) Demandeur: KUHN S.A., F-67700 Saverne (FR)
(72) Inventeur: Gantzer, Jean-Paul, F-57820 Dannelbourg (FR)

(57) **Abrégé**

La présente invention concerne un dispositif destiné à être combiné avec une barre à disques (1).

Ledit dispositif destiné à être combiné avec une barre à disques (1) est remarquable par le fait qu'il comporte :
a) une pluralité de groupes coupants (5-6-6A, 5'-6'-6A') comprenant chacun un (plusieurs) support(s) (5, 5') doté(s) d'un ou de plusieurs couteaux (6-6A, 6'-6A') et destiné(s) à être fixé(s) sur le disque de fauche (7, 7') d'un élément de fauche (7-8, 7'-8') correspondant, un groupe coupant (5-6-6A, 5'-6'-6A') et ledit élément de fauche (7-8, 7'-8') correspondant constituant un organe de hachage et/ou de broyage (2, 2') ; et
b) un capot (31) destiné à surplomber lesdits organes de hachage et/ou de broyage (2, 2').

L'invention concerne également toute machine de coupe munie d'une barre à disques.

## Description

La présente invention concerne un dispositif destiné à être combiné avec une barre à disques, laquelle comprend une pluralité d'éléments de fauche tournant chacun autour d'un axe respectif, dirigé vers le haut au cours du travail (de préférence sensiblement vertical) et disposés l'un à côté de l'autre suivant une ligne transversale par rapport à la direction d'avance lors du travail, chaque élément de fauche étant composé entre autre d'un disque de fauche et de couteaux de fauche liés audit disque de fauche.

La combinaison d'une barre de coupe à disques et du dispositif en question permet le fauchage et le hachage et/ou le broyage des végétaux.

Un tel dispositif est connu, qui comporte un rotor muni de couteaux s'étendant au-dessus des éléments de fauche de la barre à disques, et des contre-couteaux stationnaires implantés à l'arrière de la barre à disques et destinés à collaborer avec les couteaux dudit rotor pour hacher et/ou broyer les végétaux coupés par les éléments de fauche de la barre à disques.

Le rotor tourne à haut régime autour d'un axe s'étendant parallèlement à la ligne transversale suivant laquelle sont disposés les éléments de fauche de la barre à disques. Il comporte des rangées de couteaux articulés disposées parallèlement à son axe de rotation et tourne dans un sens tel qu'à l'avant lesdits couteaux se déplacent vers les éléments de fauche de la barre à disques.

Les couteaux stationnaires s'étendent derrière les éléments de fauche suivant une rangée également parallèle à la ligne suivant laquelle s'étendent lesdits éléments de fauche.

Les végétaux coupés par les éléments de fauche de la barre à disques sont repris par les couteaux articulés du rotor. Ceux-ci transportent lesdits végétaux vers le bas et vers l'arrière, et les font passer sur les contre-couteaux. C'est à ce niveau que les végétaux doivent être hachés et/ou broyés grâce notamment au haut régime de rotation du rotor. Les végétaux hachés et/ou broyés sont ensuite épandus sur une grande largeur.

Cette machine est particulièrement destinée à l'entretien des champs en friche et des jachères.

Grâce à la barre à disques, on réalise en effet une coupe très propre, ce qui ne peut pas être obtenu avec les hacheurs ou broyeurs traditionnels.

Le dispositif connu semble cependant présenter des inconvénients. Un premier inconvénient semble résider dans le fait que le rotor plaque les végétaux coupés sur les disques de fauche de la barre à disques. Il devrait en découler une absorption de puissance non négligeable. Il est par ailleurs possible que dans certaines conditions des bourrages puissent apparaître. Un autre inconvénient réside dans l'implantation des contre-couteaux stationnaires. Du fait de leur position près du sol, il est à craindre qu'ils puissent être facilement endommagés. Il n'est pas non plus exclu qu'ils puissent être détériorés lors du passage de pierres par exemple dans la machine.

La présente invention a pour objet de proposer une autre solution de dispositif destiné à être combiné avec une barre de coupe à disques en vue du fauchage et du hachage et/ou du broyage des végétaux fauchés.

A cet effet, le dispositif selon l'invention destiné à être combiné avec une barre à disques, laquelle comprend une pluralité d'éléments de fauche tournant chacun autour d'un axe respectif, dirigé vers le haut au cours du travail (de préférence sensiblement vertical) et disposés l'un à côté de l'autre suivant une ligne transversale par rapport à la direction d'avance lors du travail, chaque élément de fauche étant composé entre autre d'un disque de fauche et de couteaux de fauche liés audit disque de fauche, est caractérisé par le fait qu'il comporte :
a) une pluralité de groupes coupants comprenant chacun un (plusieurs) support(s) doté(s) d'un ou de plusieurs couteaux, et destiné(s) à être fixé(s) sur le disque de fauche d'un élément de fauche correspondant, un groupe coupant et ledit élément de fauche correspondant constituant un organe de hachage et/ou de broyage ;
   et
b) un capot destiné à surplomber lesdits organes de hachage et/ou de broyage.

Selon une caractéristique supplémentaire de l'invention, les couteaux d'un support balayent, en position montée et en vue de dessus, une surface circulaire plus petite que la surface circulaire balayée par les couteaux de fauche du disque de fauche correspondant.

Selon une autre caractéristique supplémentaire de l'invention, les couteaux d'un support balayent, en position montée et en vue de dessus, une surface circulaire qui chevauche d'une certaine distance la surface circulaire balayée par les couteaux d'un support voisin.

Selon une autre caractéristique supplémentaire de l'invention, les couteaux d'un support balayent, en position montée et en vue de dessus, une surface circulaire qui chevauche d'une certaine distance la surface circulaire balayée par les couteaux de fauche d'un disque de fauche voisin.

Selon une autre caractéristique supplémentaire de l'invention, un support balaye, en position montée et en vue de dessus, une surface circulaire qui chevauche d'une certaine distance la surface circulaire balayée par les couteaux de fauche d'un disque de fauche voisin.

Selon une autre caractéristique supplémentaire de l'invention, les couteaux d'un support balayent, en position montée et en vue de dessus, une surface circulaire qui chevauche d'une certaine distance la surface circulaire balayée par un disque de fauche voisin.

Selon une autre caractéristique supplémentaire de l'invention, les couteaux sont régulièrement espacés le long de la bordure des supports respectifs.

Selon une autre caractéristique supplémentaire de l'invention, les couteaux d'un support sont, en position montée et en vue de dessus, décalés angulairement par rapport aux couteaux de fauche du disque de fauche correspondant.

Lorsque chaque support, respectivement chaque disque de fauche, comporte deux couteaux, respectivement deux couteaux de fauche, chaque support est fixé de préférence sur le dessus du disque de fauche correspondant, de façon qu'une droite passant par les deux points de liaison de ces deux couteaux forme un angle au moins sensiblement droit avec la droite correspondante passant par les deux points de liaison des deux couteaux de fauche du disque de fauche correspondant.

Selon une autre caractéristique supplémentaire de l'invention, lorsque chaque groupe coupant comporte deux supports, les couteaux d'un support dudit groupe coupant sont, en vue de dessus, décalés angulairement par rapport aux couteaux de l'autre support dudit groupe coupant.

Lorsque chaque support comporte deux couteaux, lesdits supports sont disposés, en position montée et en vue de dessus, de façon qu'une droite passant par les deux points de liaison des deux couteaux d'un support forme un angle au moins sensiblement droit avec une droite passant par les deux points de liaison des deux couteaux de l'autre support.

Préférentiellement, ce sont les couteaux du support supérieur qui sont situés au-dessus des couteaux de fauche du disque de fauche correspondant.

Selon une autre caractéristique supplémentaire de l'invention, les couteaux d'un support sont, en position montée et en vue de dessus, décalés angulairement par rapport aux couteaux d'un support voisin.

Selon une autre caractéristique supplémentaire de l'invention, les supports sont semblables aux disques de fauche.

Avantageusement, chaque support est centré par rapport à son disque de fauche respectif.

Selon une autre caractéristique supplémentaire de l'invention, les couteaux sont montés dans des chapes prévues sur les supports correspondants par l'intermédiaire d'articulations.

Avantageusement, chaque articulation comporte :
- une entretoise qui s'étend d'une part entre les deux ailes de la chape et, d'autre part, au travers de trous prévus dans les couteaux, sa longueur étant quelque peu plus grande que la largeur des deux couteaux, et
- un boulon qui s'étend au travers des trous prévus dans les ailes de la chape et de l'entretoise.

Avantageusement également, chaque articulation lie un ou plusieurs couteaux au support correspondant. Préférentiellement, à chaque articulation sont associés deux couteaux coudés, adossés l'un à l'autre de façon à former un "Y".

Selon une caractéristique supplémentaire de l'invention, le capot comporte une tôle déflectrice comprenant une première surface sensiblement horizontale et plane, située au-dessus des organes de hachage et/ou de broyage, et au bord avant de laquelle est raccordée une deuxième surface qui s'étend vers l'avant et vers le haut, tandis qu'au bord arrière de ladite première surface est raccordée une troisième surface s'étendant vers le bas.

Avantageusement, en position montée, le bord avant de la première surface est situé quelque peu en avant de l'axe de rotation des organes de hachage et/ou de broyage.

Selon une caractéristique supplémentaire de l'invention, il est prévu au moins un élément de retenue destiné à freiner l'évacuation des végétaux vers l'arrière de la machine de manière à assurer un hachage et/ou un broyage correct de ces derniers.

A cet effet, chaque élément de retenue peut être, en vue orthogonale à la direction d'avance lors du travail, avantageusement fixé à la première surface de la tôle déflectrice entre le bord avant de celle-ci et l'axe de rotation des organes de hachage et/ou de broyage correspondants et, en vue suivant la direction d'avance lors du travail, au moins sensiblement dans la partie médiane entre lesdits axes de rotation desdits organes de hachage et/ou de broyage correspondants, chaque élément de retenue s'étendant également, à partir de son point de fixation, à la première surface vers l'arrière et vers le bas, de manière à éviter une accumulation des végétaux autour desdits éléments de retenue.

Dans une réalisation préférentielle, ledit élément de retenue pourra être constitué par un fer plat.

Du reste, le bord avant de la deuxième surface s'étend approximativement au-dessus de la partie frontale de la surface circulaire balayée par les couteaux de fauche.

Le bord arrière de la première surface, quant à lui, est situé approximativement au-dessus de la partie arrière de la surface circulaire balayée par les couteaux de fauche.

Dans l'invention, il peut être prévu que la distance verticale entre la première surface et les organes de hachage et/ou de broyage soit réglable.

Il peut aussi être prévu que l'angle que forme la troisième surface avec la première surface soit réglable.

Il peut également être prévu que la distance verticale entre le bord inférieur de la troisième surface et la surface balayée par les couteaux de fauche des disques de fauche soit réglable.

Il peut du reste être prévu que la distance longitudinale (suivant la direction d'avance au travail) entre le bord inférieur de la troisième surface et la partie arrière de la surface circulaire balayée par les couteaux de fauche des disques de fauche soit réglable.

Le bord inférieur de la troisième surface sera avantageusement situé plus haut que les couteaux de fauche et, compte tenu du sens d'avance au travail, en arrière de la partie arrière de la surface circulaire balayée par lesdits couteaux de fauche.

Selon une caractéristique supplémentaire, l'invention comporte un sus un moyen de rehaussement destiné à être implanté sous la barre à disques. Ceci permet d'éviter une accumulation de végétaux devant ladite barre de coupe et que cette dernière fasse office de bouteur.

L'invention concerne également une machine de coupe munie d'une barre à disques, laquelle comprend une pluralité d'éléments de fauche tournant chacun autour d'un axe respectif dirigé vers le haut au cours du travail (de préférence sensiblement vertical) et disposés l'un à côté de l'autre suivant une ligne transversale par rapport à la direction d'avance lors du travail, chaque élément de fauche étant composé d'un disque de fauche et de couteaux de fauche, laquelle machine de coupe est équipée d'un dispositif selon l'invention.

Préférentiellement, les organes de hachage et/ou de broyage de la machine de coupe selon l'invention sont entraînés de manière synchronisée.

D'autres objets et caractéristiques de l'invention ressortiront de la description ci-après, avec référence aux dessins annexés qui représentent, à titre d'exemples non limitatifs, quelques formes de réalisation du dispositif selon l'invention.

Sur ces dessins :
- la figure 1 est une vue de face d'une première forme de réalisation du dispositif monté sur une barre à disques ;
- la figure 2 est une vue de dessus du mécanisme représenté sur la figure 1, sans le capot ;
- la figure 3 est un agrandissement du mécanisme représenté sur la figure 1, sans le capot ;
- la figure 4 est une vue de dessus du mécanisme représenté sur la figure 3 ;
- la figure 5 est une vue de côté suivant le plan V défini sur la figure 4, sur laquelle ont été effectuées différentes coupes partielles ;
- la figure 6 est une vue en coupe partielle, suivant le plan VI défini sur la figure 4, du montage de couteaux sur le support d'un groupe coupant du dispositif ;
- la figure 7 est un agrandissement partiel de la figure 5, montrant plus précisément la liaison du support d'un groupe coupant du dispositif au disque de fauche correspondant de la barre à disques ;
- la figure 8 est un agrandissement (analogue à la figure 7) d'une deuxième forme de réalisation de la liaison du support d'un groupe coupant du dispositif au disque de fauche correspondant d'une barre à disques ;
- la figure 9 est une vue de face d'une deuxième forme de réalisation du dispositif monté sur une barre à disques, sans le capot ;
- la figure 10 est une vue de dessus du mécanisme représenté sur la figure 9 ;
- la figure 11 est une vue de côté, suivant le plan XI défini sur la figure 10, sur laquelle ont été effectuées différentes coupes partielles ;
- la figure 12 est une vue de face d'une troisième forme de réalisation du dispositif monté sur une barre à disques ;
- la figure 13 est une vue de côté, suivant le plan XIII défini sur la figure 12.

La barre à disques (1) combinée avec le dispositif selon l'invention, comprend des organes de hachage et/ou de broyage (2 ; 2' ; 2A ; 2A') tournant chacun, au cours du travail, autour d'un axe (3, 3') respectif sensiblement vertical et disposés l'un à côté de l'autre suivant une ligne (4) transversale par rapport à la direction d'avance (A) lors du travail. Ces organes de hachage et/ou de broyage (2 ; 2' ; 2A ; 2A') sont entraînés en rotation de manière synchronisée.

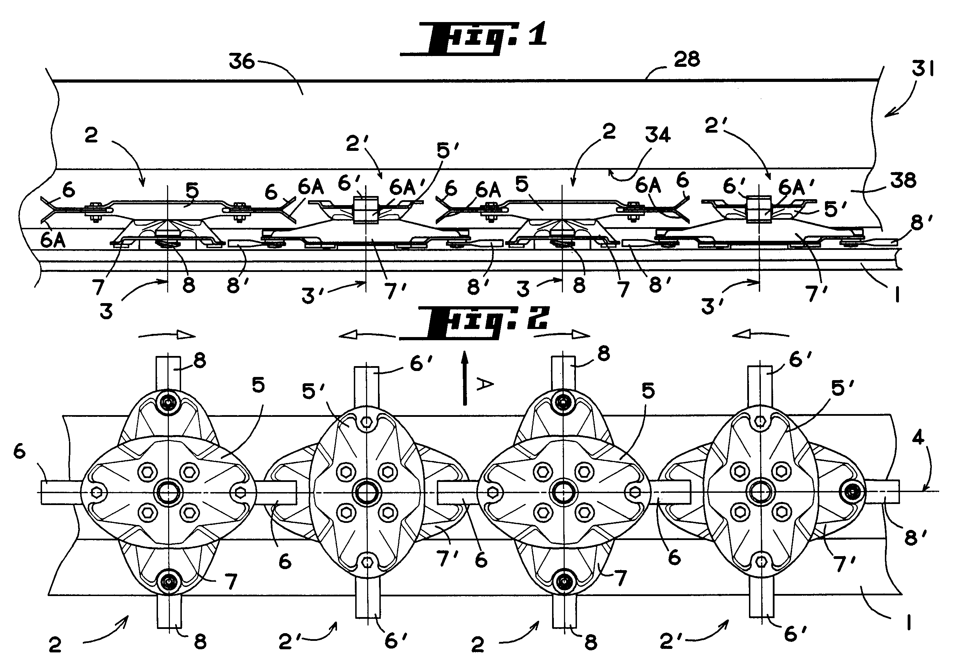

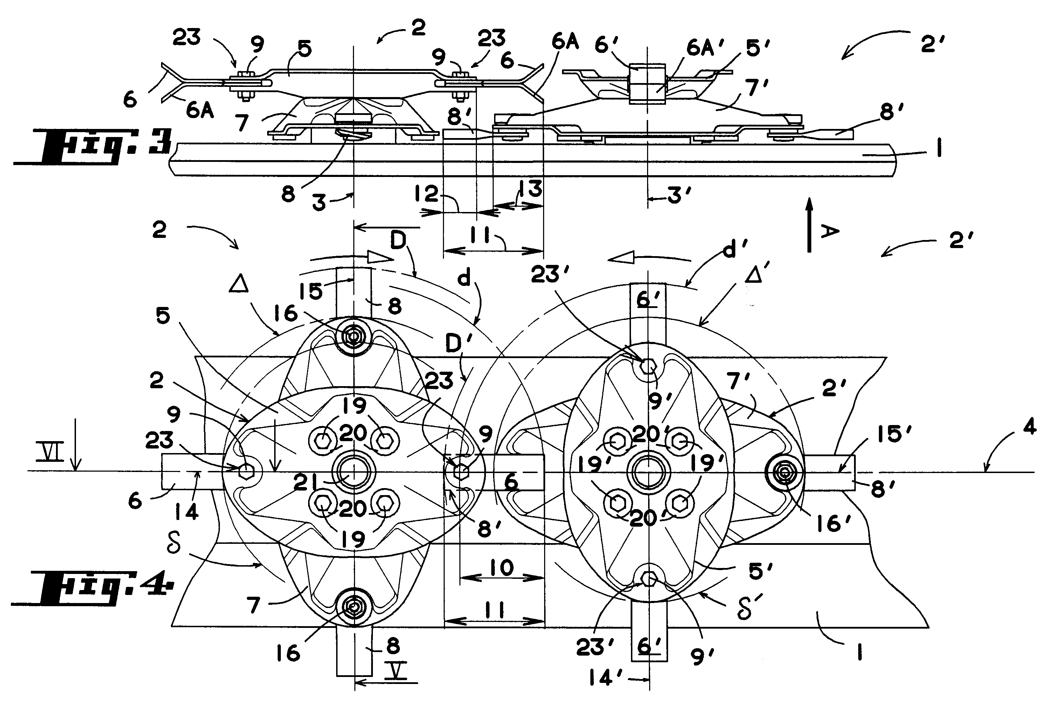

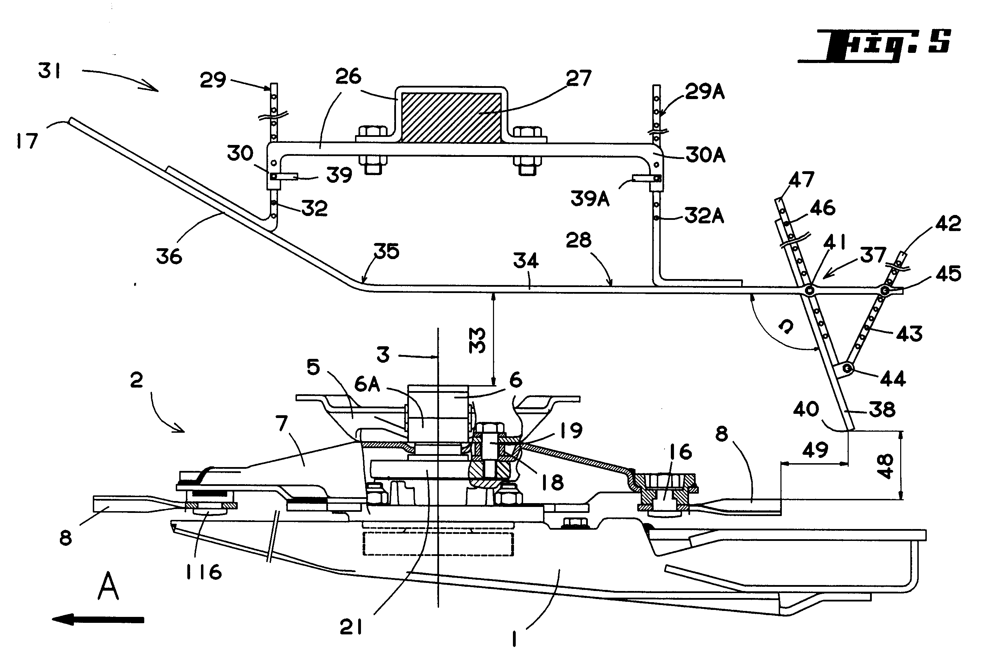

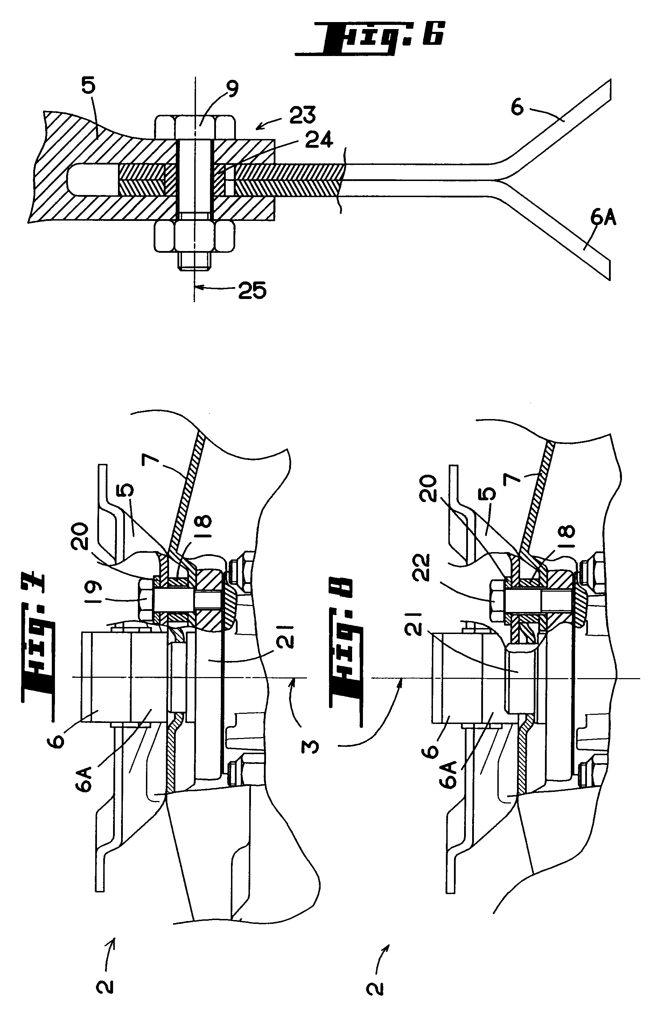

Sur les figures 1 à 5, 7 et 8, on voit qu'un organe de hachage et/ou de broyage (2 ; 2') est composé d'un groupe coupant (5-6-6A, 5'-6'-6A') et d'un élément de fauche (7-8, 7'-8') connu, qui font partie respectivement du dispositif selon l'invention et de la barre à disques (1).

Ledit groupe coupant (5-6-6A, 5'-6'-6A') est composé d'un support (5, 5') (qui est, dans l'exemple représenté, un disque de forme semblable à celle du disque de fauche (7, 7'), auquel sont liés des couteaux (6-6A, 6'-6A') de manière régulièrement espacée le long de la bordure dudit support (5, 5').

Dans sa partie médiane, le support (5, 5') est fixé sur le disque de fauche (7, 7') de l'élément de fauche (7-8, 7'-8') respectif au moyen de quatre vis (19, 19') et rondelles (20, 20').

En position montée et en vue de dessus, les couteaux (6-6A, 6'-6A') d'un support (5, 5') balayent une surface circulaire de diamètre (d, d') plus petite que la surface circulaire de diamètre (D, D') balayée par les couteaux de fauche (8, 8') du disque de fauche (7, 7') correspondant. De cette façon, les plantes sont d'abord coupées par les couteaux de fauche (8, 8') et sont ensuite attaquées par les couteaux (6-6A, 6'-6A'). Ainsi, on coupe dans un premier temps les plantes à hacher et/ou à broyer relativement près du sol avec les couteaux de fauche (8, 8') et, dans un deuxième temps, on hache et/ou broie lesdites plantes coupées avec les couteaux (6-6A, 6'-6A').

Du reste, la surface circulaire de diamètre (d) balayée par les couteaux (6-6A) du support (5) chevauche, en vue de dessus, d'une distance (10) la surface circulaire de diamètre (d') balayée par les couteaux (6'-6A') du support (5') voisin et d'une distance (11) la surface circulaire de diamètre (D') balayée par les couteaux de fauche (8') du disque de fauche (7') voisin.

On voit également que la surface circulaire de diamètre (δ) balayée par le support (5) chevauche, en vue de dessus, d'une distance (12) la surface circulaire de diamètre (D') balayée par les couteaux de fauche (8') du disque de fauche (7') voisin. Cette distance (12) est, dans l'exemple représenté, au moins sensiblement égale à la moitié de la longueur des couteaux de fauche (8'). On voit par ailleurs que la surface circulaire de diamètre (d) balayée par les couteaux (6-6A) chevauche, en vue de dessus, d'une distance (13), la surface circulaire de diamètre (Δ') balayée par le disque de fauche (7') voisin. Cette distance (13) est au moins sensiblement égale à la moitié de la longueur des couteaux (6-6A).

On voit enfin que le support (5, 5') est monté d'une façon particulière sur le disque de fauche (7, 7') correspondant : ses couteaux (6-6A, 6'-6A') sont décalés angulairement par rapport aux couteaux de fauche (8, 8'). Les couteaux (6-6A) d'un support (5) sont, du reste, également décalés angulairement par rapport aux couteaux (6'-6A') du support (5') voisin. Dans le cas où le support (5, 5'), respectivement le disque de fauche (7, 7') correspondant comporte chacun deux points de liaison (diamétralement opposés) pour les couteaux (6-6A, 6'-6A'), respectivement les couteaux de fauche (8, 8'), ledit support (5, 5') est fixé sur le dessus du disque de fauche (7, 7') correspondant, de façon qu'une droite (14, 14') passant par les deux points de liaison desdits couteaux (6-6A, 6'-6A') (représentés par les boulons (9, 9')) forme un angle au moins sensiblement droit avec la droite (15, 15') passant par les deux points de liaison desdits couteaux de fauche (8, 8') (représentés par les boulons (16, 16')). Par ailleurs, ladite droite (14) passant par les deux points de liaison des couteaux (6-6A) du support (5) est décalée angulairement par rapport à la droite (14') passant par les deux points de liaison desdits couteaux (6'-6A') du support (5') voisin. Dans la position représentée, ce décalage est de 90°. On comprendra toutefois que ce décalage varie pendant la rotation. En fait, lorsqu'on monte les supports (5, 5') du dispositif selon l'invention sur une barre à disques (1), tel que cela a été décrit ci-avant, chaque support (5, 5') est sensiblement perpendiculaire au disque de fauche (7, 7') correspondant et, par conséquent, le décalage angulaire entre deux supports (5, 5') voisins, est également sensiblement identique au décalage angulaire entre les deux disques de fauche (7, 7') correspondants.

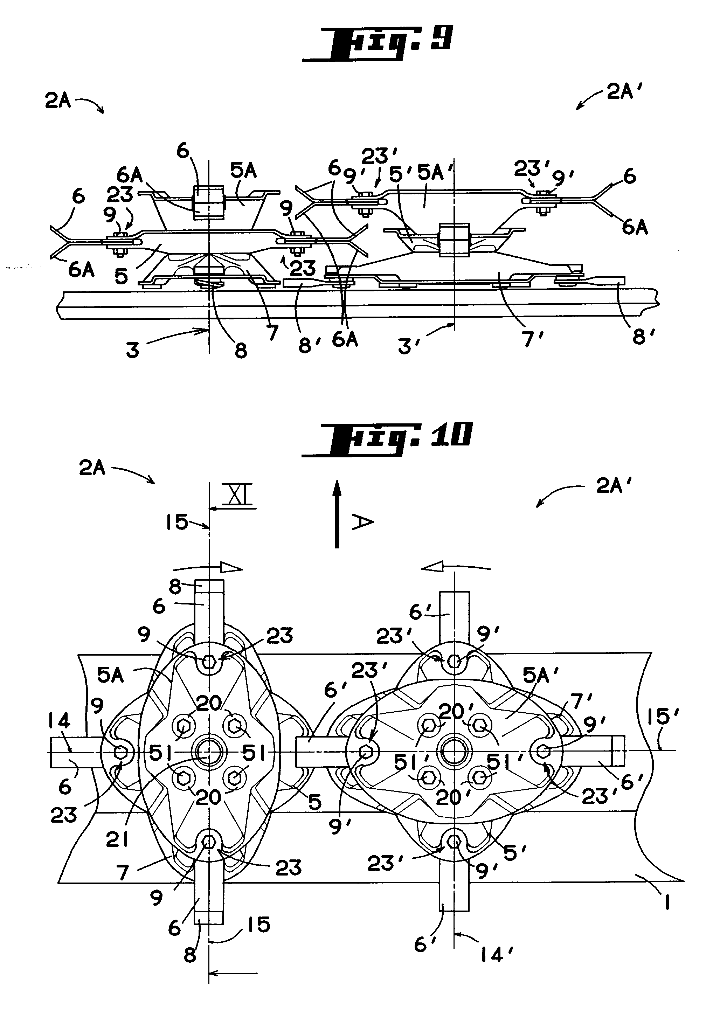

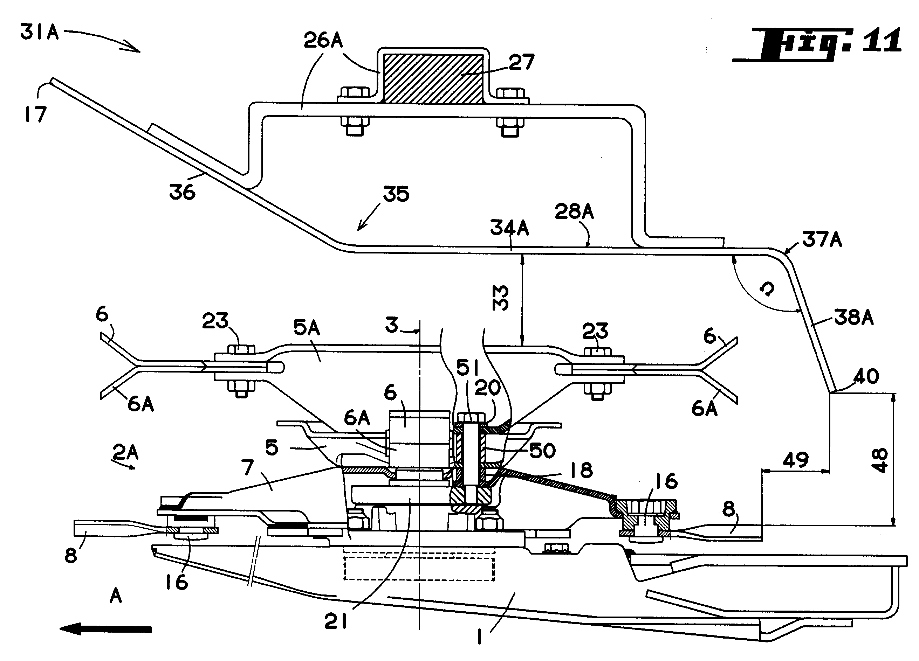

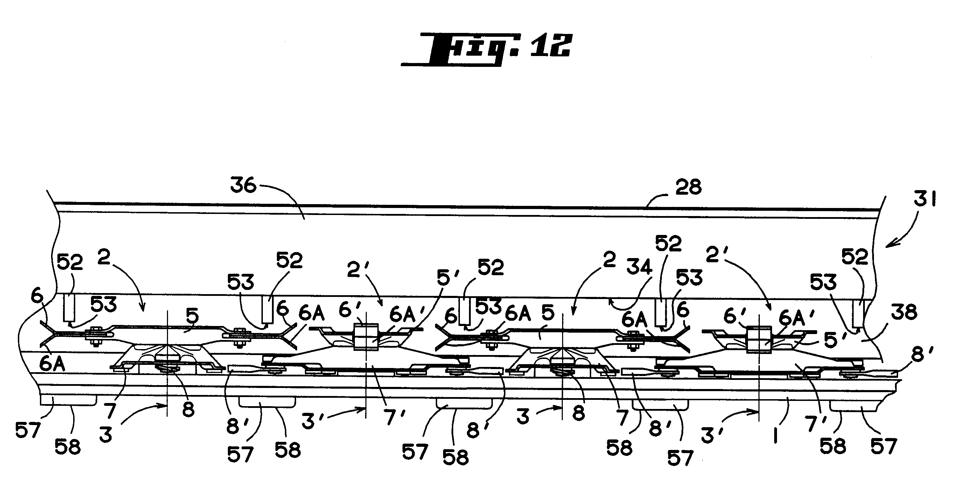

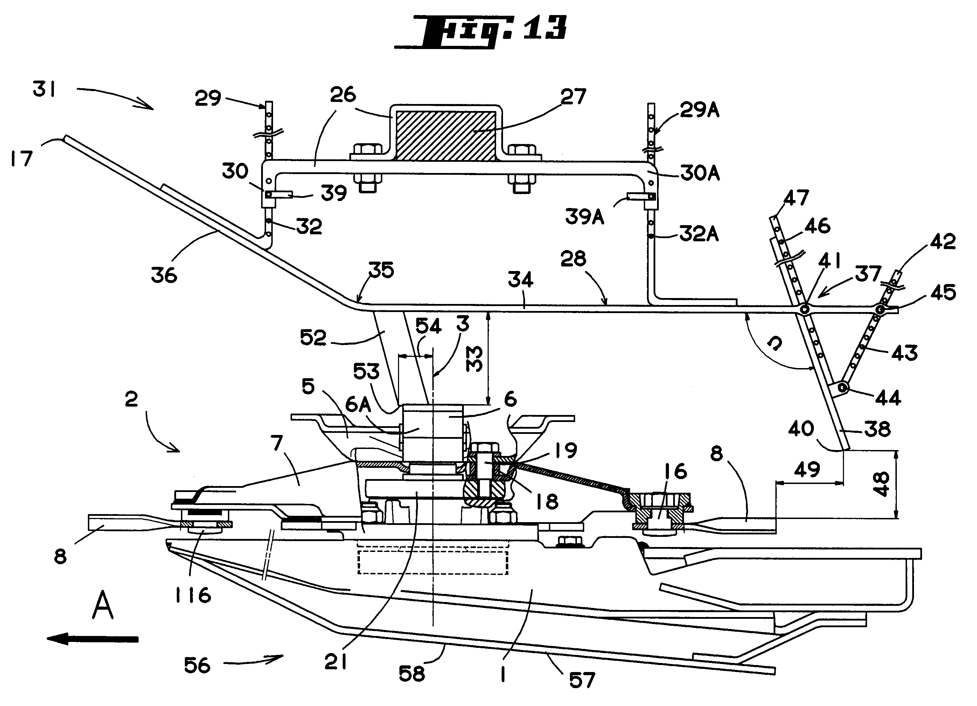

Les figures 7 et 8 représentent plus particulièrement deux exemples de montage et de centrage d'un support (5) sur un disque de fauche (7). Le support (5) prend appui avec sa partie inférieure d'une part sur la partie supérieure du disque de fauche (7) et, d'autre part, sur quatre entretoises (18) qui sont montées entre ledit support (5) et ledit disque de fauche (7). Le support (5) et le disque de fauche (7) sont maintenus ensemble par l'intermédiaire de quatre vis (19, 22) vissées dans l'entraîneur (21) du disque de fauche (7). A cet effet, chaque vis (19, 22) traverse le support (5), une entretoise (18) et le disque de fauche (7) qui est centré sur l'entraîneur (21).

La figure 7 montre plus particulièrement un centrage du support (5) par l'intermédiaire des vis (19) qui font également office de plots de centrage. En effet, chaque vis (19) est centrée dans le disque de fauche (7) qui est lui-même centré sur l'entraîneur (21), tandis que le support (5) est centré sur lesdites vis (19).

La figure 8 montre plus particulièrement un centrage du support (5), par l'intermédiaire de l'entraîneur (21). En effet, dans cette solution, le support (5) est directement centré sur l'entraîneur (21), tout comme le disque de fauche (7). Les vis (22) peuvent être, dans ce cas, de simples vis d'assemblage fixant le support (5) sur le disque de fauche (7). Une telle construction présente une robustesse accrue.

La figure 6 représente plus en détail un exemple de liaison de deux couteaux (6-6A) sur un support (5). Les couteaux (6-6A) sont montés en chape sur le support (5) par l'intermédiaire d'une articulation (23). Cette dernière comporte un boulon (9) qui traverse de part en part le support (5), ainsi qu'une entretoise (24) qui s'étend entre les deux ailes de la chape et qui y est immobilisée par le boulon (9). Ladite entretoise (24) s'étend au travers de trous prévus dans les couteaux (6-6A) et sa longueur est quelque peu plus grande que la largeur des deux couteaux (6-6A), de telle sorte, qu'après serrage du boulon (9), les couteaux (6-6A) puissent tourner autour de l'axe (25) dans les limites permises par la chape du support (5). Les couteaux (6-6A) peuvent ainsi s'escamoter en cas de percussion d'un obstacle tel qu'une pierre par exemple.

Une telle conception de l'articulation (23) permet également d'assurer un maximum de sécurité. En effet, la pièce d'usure de l'articulation (23) est constituée par l'entretoise (24). En cas d'endommagement, voire de rupture de ladite entretoise (24), les couteaux (6-6A) resteront toujours liés au support (5) par l'intermédiaire du boulon (9), alors que si la pièce d'usure était directement constituée par le boulon (9), les couteaux (6-6A) pourraient être projetés, en cas de rupture dudit boulon (9), ce qui constituerait un danger substantiel pour les personnes se trouvant dans les alentours de la machine.

La figure 6 montre par ailleurs des couteaux (6-6A) coudés et adossés l'un à l'autre, de façon à former un "Y". Chaque couteau (6-6A) possède une arête tranchante de part et d'autre. Il est toutefois évident que des couteaux de forme différente et de nombre différent peuvent être utilisés en lieu et place de ceux représentés sur la figure 6.

Alors qu'à la lumière des figures 6 à 8, on a décrit un organe de hachage et/ou de broyage (2), on comprendra que la description s'applique également à un organe de hachage et/ou de broyage (2').

Le dispositif selon l'invention comprend également un capot (31) qui surplombe les organes de hachage et/ou de broyage (2 ; 2'). Ce capot est représenté sur les figures 1 et 5 et comporte une tôle déflectrice (28) et un support (26) par l'intermédiaire duquel il est bridé sur le châssis (27) de la machine.

La tôle déflectrice (28) est liée au support (26) au moyen d'organes de réglage (29, 29A) permettant de faire varier la distance verticale (33) entre la tôle déflectrice (28) et les organes de hachage et/ou de broyage (2 ; 2').

Les organes de réglage (29, 29A) sont constitués respectivement par des manchons (30, 30A) du support (26) et des tiges (32, 32A) solidaires de la tôle déflectrice (28). Chaque tige (32, 32A) est destinée à être enfilée dans le manchon (30, 30A) correspondant et comporte une multitude de trous pouvant être amenés en face d'un trou prévu dans le manchon (30, 30A). Une broche (39, 39A) enfilée dans le trou du manchon (30, 30A) et dans un trou de la tige (32, 32A), maintient la distance (33) choisie.

Grâce à cette caractéristique, il est possible d'adapter la distance (33) aux conditions rencontrées (nature et/ou densité du produit à hacher et/ou broyer). Des essais pratiques ont montré que pour une densité moyenne, la distance (33) peut avantageusement être sensiblement égale à 70 mm.

La tôle déflectrice (28) du capot (31) comporte une première surface (34) sensiblement horizontale et plane, située au-dessus des organes de hachage et/ou de broyage (2 ; 2') et au bord avant (35) de laquelle est raccordée une deuxième surface (36) qui s'étend vers l'avant et vers le haut. Au bord arrière (37) de ladite première surface (34) est raccordée une troisième surface (38) s'étendant vers le bas.

Le bord avant (35) de la première surface (34) est situé quelque peu en avant de l'axe de rotation (3, 3') des organes de hachage et/ou de broyage (2 ; 2'). Le bord avant (17) de la deuxième surface (36), quant à lui, s'étend approximativement au-dessus de la partie frontale de la surface circulaire de diamètre (D, D') balayée par les couteaux de fauche (8, 8') des disques de fauche (7, 7'). En ce qui concerne le bord arrière (37) de la première surface (34), celui-ci est situé approximativement au-dessus de la partie arrière de la surface circulaire de diamètre (D, D') balayée par les couteaux de fauche (8, 8').

La troisième surface (38) est liée au bord arrière (37) de la première surface (34) par une liaison pivot (41) qui permet, entre autre, de faire varier l'angle (Ω) que forme la troisième surface (38) avec la première surface (34). Le réglage de l'angle (Ω) s'effectue par l'intermédiaire d'une tige de réglage (42) qui possède une multitude de trous (43). Cette tige de réglage (42) est liée à la troisième surface (38) en (44) et à la première surface (34) en (45). Le réglage de l'angle (Ω) s'effectue en liant la tige de réglage (42) en (45) par l'intermédiaire du trou (43) adéquat, ce qui a pour effet de faire pivoter la troisième surface (38) sur le pivot (41) jusque dans la position angulaire choisie.

La troisième surface (38) peut également être réglée en hauteur par l'intermédiaire de tiges de réglage (47) qui possèdent chacune une multitude de trous (46) et qui sont solidaires de la troisième surface (38). Le réglage de la hauteur de la troisième surface (38) par rapport aux organes de broyage (2 ; 2') s'effectue en déplaçant la tige de réglage (47) par rapport à la liaison pivot (41) par l'intermédiaire des trous (46).

Grâce à cet agencement, il est donc possible de régler d'une part les distances (48, 49) du bord inférieur (40) de la troisième surface (38) par rapport aux couteaux de fauche (8, 8') des disques de fauche (7, 7') et, d'autre part, l'angle (Ω) de la troisième surface (38) par rapport à la première surface (34). Un tel réglage permet de s'adapter aux différentes conditions rencontrées. Il permet également de faire varier l'orifice d'évacuation des plantes hachées et/ou broyées et, de ce fait, de retarder à volonté l'évacuation des plantes à hacher et/ou à broyer, de sorte à déterminer leur degré de hachage et/ou de broyage.

En effet, lorsqu'on augmente les distances (48 et/ou 49) et/ou l'angle (Ω), on augmente l'orifice d'évacuation des plantes hachées et/ou broyées ; celles-ci resteront ainsi soumises moins longtemps à l'action des organes de hachage et/ou de broyage (2 ; 2'). Inversement, lorsqu'on réduit les distances (48 et/ou 49) et/ou l'angle (Ω), on oblige les plantes à rester plus longtemps dans la zone d'action des organes de hachage et/ou de broyage (2 ; 2'), ce qui augmentera le degré de hachage et/ou de broyage desdites plantes. En pratique, un hachage et/ou broyage satisfaisant(s) a (ont) pu être obtenu(s) avec une distance (49) sensiblement égale à 55 mm, une distance (48) sensiblement égale à 65 mm et un angle (Ω) sensiblement égal à 110°.

Le dispositif tel que représenté sur les figures 9, 10, 11 est, dans le principe, tout à fait semblable à celui qui a été décrit auparavant, sauf en ce qui concerne la construction des organes de hachage et/ou de broyage et du capot surplombant ces derniers.

Dans cet exemple de réalisation, chaque organe de hachage et/ou de broyage (2A ; 2A') comporte un support (5A, 5A') - muni de couteaux (6-6A, 6'-6A') - supplémentaire monté sur le premier support (5, 5') avec un décalage angulaire par rapport à ce dernier (dans l'exemple représenté, ce décalage angulaire est d'environ 90°). Les supports (5A, 5A') sont identiques aux supports (5, 5').

Il apparaît sur la figure 11 que le support (5A) prend appui avec sa partie inférieure sur quatre entretoises (50) implantées entre ledit support (5A) et le support (5) correspondant. Le support (5A), le support (5) et le disque de fauche (7) sont maintenus ensemble par quatre vis (51) vissées dans l'entraîneur (21). A cet effet, chaque vis (51) traverse le support (5A), une entretoise (50), le support (5), une entretoise (18) et le disque de fauche (7) qui est centré sur l'entraîneur (21). Les vis (51) servent également de plots de centrage tout comme les vis (19) décrites précédemment.

On comprendra que le montage d'un support (5A') sur le support (5') et le disque de fauche (7') correspondant s'opère de la même manière.

Le capot (31A) qui surplombe les organes de hachage et/ou de broyage (2A ; 2A'), comporte une tôle déflectrice (28A) et un support (26A) par l'intermédiaire duquel il est bridé sur le châssis (27) de la machine.

La tôle déflectrice (28A) comporte également une première surface (34A) sensiblement horizontale et plane, s'étendant à une distance (33) au-dessus des organes de hachage et/ou de broyage (2A ; 2A'). Au bord avant (35) de cette première surface (34A) est raccordée une deuxième surface (36) identique à la deuxième surface (36) décrite précédemment. Au bord arrière (37A) de la première surface (34A) est raccordée une troisième surface (38A) qui s'étend vers le bas et est inclinée vers l'arrière suivant un angle (Ω). Le bord inférieur (40) de cette troisième surface (38A) s'étend à une certaine distance (48) au-dessus du plan de coupe des couteaux de fauche (8, 8') et à une certaine distance (49) en arrière de la surface circulaire de diamètre (D, D') décrite par lesdits couteaux de fauche (8, 8').

La barre à disques (1) ainsi combinée avec le dispositif selon l'invention fonctionne de la manière suivante.

Au travail, la machine est mue dans un champ couvert de plantes à hacher et/ou broyer. Les plantes sont d'abord coupées proprement près du sol par les couteaux de fauche (8, 8') des disques de fauche (7, 7'). A cet effet, la deuxième surface (36) du capot (31; 31A) incline quelque peu les plantes pour que les couteaux de fauche (8, 8') puissent correctement couper celles-ci et pour que les plantes coupées pénètrent correctement et facilement sous le capot (31; 31A). Ce dernier a pour fonction de retenir quelque peu les plantes pour que celles-ci soient correctement soumises à l'action des couteaux (6-6A, 6'-6A'). En effet, la première surface (28 ; 28A) plaque les plantes sur les couteaux (6-6A, 6'-6A') et la troisième surface (38 ; 38A) retarde quelque peu la sortie desdits plantes par l'orifice d'évacuation arrière.

Le dispositif représenté sur les figures 12 et 13 est, dans le principe, tout à fait semblable à celui décrit selon la première forme de réalisation, sauf qu'il comporte en sus des éléments de retenue (52) et un moyen de rehaussement (57).

En effet, dans cet exemple de réalisation, sont fixés entre le bord avant (35) de la première surface (34) et les axes de rotation (3, 3'), des éléments de retenue (52). Chaque élément de retenue (52) s'étend à partir de son point de fixation à la première surface (34), vers l'arrière - compte tenu de la direction d'avance (A) - et vers le bas en direction des organes de hachage et/ou de broyage (2, 2'). En vue suivant la direction d'avance (A) lors du travail, chaque élément de retenue (52) s'étend de surcroît à mi-distance entre les axes de rotation (3, 3') des deux organes de hachage et/ou de broyage (2, 2') correspondants.

Dans l'exemple de réalisation représenté, chaque élément de retenue (52) est composé d'un profilé plat parallélépipédique dont la face inférieure (53) est au moins sensiblement parallèle à la première surface (34). En pratique, un hachage et/ou un broyage satisfaisants ont pu être obtenus avec une distance (54) entre le point frontal de la face inférieure (53) de chaque élément de retenue (52) et les axes de rotation (3, 3') des organes de hachage et/ou de broyage (2, 2') correspondants, au moins sensiblement égal à 100 mm et lorsque la face inférieure (53) dudit élément de retenue (52) est proche du volume balayé par les couteaux (6-6A, 6'-6A') des organes de hachage et/ou de broyage (2, 2') correspondant.

Il est également prévu des moyens de rehaussement (56) qui sont dans l'exemple de réalisation représenté, des sabots (57) fixés sous la barre à disques (1) et espacés au moins sensiblement régulièrement sous cette dernière. Chaque sabot (57) comporte une surface (58) au moins sensiblement plane destinée à glisser sur le sol lors du travail.

Au travail, la machine repose sur le sol au moyen des sabots (57) et est mue dans un champ couvert de plantes à hacher et/ou broyer. Les plantes sont d'abord coupées proprement près du sol par les couteaux de fauche (7, 7'). A cet effet, la deuxième surface (36) du capot (31) incline quelque peu les plantes pour que les couteaux de fauche (8, 8') puissent correctement couper celles-ci et pour que les plantes coupées pénètrent correctement et facilement sous le capot (31). Ce dernier a pour fonction de retenir quelque peu en liaison avec les éléments de retenue (52) les plantes pour que celles-ci soient correctement soumises à l'action des couteaux (6-6A, 6'-6A').

En effet, la première surface (28) plaque les plantes sur les couteaux (6-6A, 6'-6A') et la troisième surface (38) retarde quelque peu la sortie desdites plantes par l'orifice d'évacuation arrière.

Avec cette machine, on obtient non seulement une coupe parfaite des plantes, mais également un bon hachage et/ou broyage de celles-ci.

Il convient de noter que le dispositif selon l'invention permet de transformer une faucheuse à disques en faucheuse-hacheuse et/ou broyeuse, mais que ce dispositif peut à tout moment être démonté pour que l'utilisateur puisse à nouveau utiliser la machine en simple faucheuse.

Finalement, différentes modifications restent possibles, notamment en ce qui concerne la constitution des divers éléments ou par substitution d'équivalents techniques, sans pour autant sortir du domaine de protection défini dans les revendications.

Il est notamment parfaitement imaginable d'animer les différents organes de hachage et/ou de broyage (2 ; 2'; 2A ; 2A') dans des sens de rotation différents de ceux indiqués dans les figures.

Il est également parfaitement imaginable que la position des différents supports (5, 5'; 5A, 5A') entre eux ou par rapport aux disques de fauche (7, 7'), de même que les dimensions desdits supports (5, 5'; 5A, 5A') par rapport à celles des disques de fauche (7, 7') soient différentes de celles représentées.

Il est aussi possible que les supports (5, 5'; 5A, 5A') aient une forme différente de celle représentée.

Il est du reste parfaitement possible de combiner entre eux les divers éléments des trois exemples de réalisation décrits.

Il peut également être prévu un moyen situé au niveau des sabots (57) permettant de régler la hauteur de coupe des végétaux.

Il est encore imaginable que le moyen de rehaussement (56) soit constitué d'un rouleau s'étendant au moins sensiblement perpendiculairement à la direction d'avance (A) derrière la barre à disques (1).

Le dispositif selon l'invention permet de transformer une faucheuse à disques connue, disposée à l'arrière (en version attelée ou traînée) ou à l'avant d'un véhicule moteur, en faucheuse hacheuse et/ou broyeuse.

Il est également possible d'utiliser ce dispositif en combinaison avec une barre à disques dans des machines du type broyeur, hacheur, épareuse, etc. habituellement connues pour l'entretien d'espaces tels que vergers, bords de route, etc.

## Revendications

1. Dispositif destiné à être combiné avec une barre à disques (1) laquelle comprend une pluralité d'éléments de fauche (7-8, 7'-8') tournant chacun autour d'un axe (3, 3') respectif dirigé vers le haut au cours du travail (de préférence sensiblement vertical) et disposés l'un à côté de l'autre suivant une ligne (4) transversale par rapport à la direction d'avance (A) lors du travail, chaque élément de fauche (7-8, 7'-8') étant composé entre autre d'un disque de fauche (7, 7') et de couteaux de fauche (8, 8') liés audit disque de fauche (7, 7'), caractérisé en ce que ce dispositif comporte :
a) une pluralité de groupes coupants (5-6-6A, 5'-6'-6A', 5-5A-6-6A, 5'-5A'-6'-6A') comprenant chacun un (plusieurs) support(s) (5 ; 5'; 5, 5A; 5', 5A') doté(s) d'un ou de plusieurs couteaux (6-6A, 6'-6A') et destiné(s) à être fixé(s) sur le disque de fauche (7, 7') d'un élément de fauche (7-8, 7'-8') correspondant, un groupe coupant (5-6-6A, 5'-6'-6A', 5-5A-6-6A, 5'-5A'-6'-6A') et ledit élément de fauche (7-8, 7'-8') correspondant constituant un organe de hachage et/ou de broyage (2 ; 2'; 2A ; 2A'); et
b) un capot (31; 31A) destiné à surplomber lesdits organes de hachage et/ou de broyage (2 ; 2'; 2A ; 2A').

2. Dispositif selon la revendication 1, caractérisé en ce qu'en position montée et en vue de dessus, les couteaux (6-6A, 6'-6A') d'un support (5; 5'; 5A ; 5A') balayent une surface circulaire de diamètre (d, d') plus petite que la surface circulaire de diamètre (D, D') balayée par les couteaux de fauche (8, 8') du disque de fauche (7, 7') correspondant.

3. Dispositif selon la revendication 1 ou 2, caractérisé par en ce qu'en position montée et en vue de dessus, les couteaux (6-6A) d'un support (5 ; 5A) balayent une surface circulaire de diamètre (d) qui chevauche d'une distance (10) la surface circulaire de diamètre (d') balayée par les couteaux (6'-6A') d'un support ( 5'; 5A') voisin.

4. Dispositif selon l'une au moins des revendications 1 à 3, caractérisé en ce qu'en position montée et en vue de dessus, les couteaux (6-6A, 6'-6A') d'un support (5 ; 5'; 5A ; 5A') balayent une surface circulaire de diamètre (d, d') qui chevauche d'une distance (11) la surface circulaire de diamètre (D', D) balayée par les couteaux de fauche (8', 8) d'un disque de fauche (7', 7) voisin.

5. Dispositif selon l'une au moins des revendications 1 à 4, caractérisé en ce qu'en position montée et en vue de dessus, un support (5; 5'; 5A ; 5A') balaye une surface circulaire de diamètre (δ, δ') qui chevauche d'une distance (12) la surface circulaire de diamètre (D', D) balayée par les couteaux de fauche (8', 8) d'un disque de fauche (7', 7) voisin.

6. Dispositif selon l'une au moins des revendications 1 à 5, caractérisé en ce qu'en position montée et en vue de dessus, les couteaux (6-6A, 6'-6A') d'un support (5 ; 5'; 5A ; 5A') balayent une surface circulaire de diamètre (d, d') qui chevauche d'une distance (13) la surface circulaire de diamètre (Δ', Δ) balayée par un disque de fauche (7', 7) voisin.

7. Dispositif selon l'une au moins des revendications 1 à 6, caractérisé en ce que les couteaux (6-6A, 6'-6A') sont régulièrement espacés le long de la bordure des supports (5 ; 5'; 5A ; 5A') respectifs.

8. Dispositif selon l'une au moins des revendications 1 à 7, caractérisé en ce qu'en position montée et en vue de dessus, les couteaux (6-6A, 6'-6A') d'un support (5 ; 5') sont décalés angulairement par rapport aux couteaux de fauche (8, 8') du disque de fauche (7, 7') correspondant.

9. Dispositif selon la revendication 8, caractérisé en ce que chaque support (5 ; 5'), respectivement chaque disque de fauche (7, 7') comporte deux couteaux (6-6A, 6'-6A'), respectivement deux couteaux (8, 8'), et que chaque support (5, 5') est fixé sur le dessus du disque de fauche (7, 7') correspondant, de façon qu'une droite (14, 14') passant par ces deux points de liaison de ses deux couteaux (6-6A, 6'-6A') forme un angle au moins sensiblement droit avec la droite (15, 15') correspondante passant par les deux points de liaison des deux couteaux de fauche (8, 8') du disque de fauche (7, 7') correspondant.

10. Dispositif selon la revendication 8 ou 9, caractérisé en ce que chaque groupe coupant comporte deux supports (5, 5A ; 5', 5A') et qu'en vue de dessus les couteaux (6-6A, 6'-6A') d'un support (5, 5') dudit groupe coupant sont décalés angulairement par rapport aux couteaux (6-6A, 6'-6A') de l'autre support (5A, 5A') dudit groupe coupant.

11. Dispositif selon les revendications 9 et 10, caractérisé en ce que chaque support (5 ; 5'; 5A ; 5A') comporte deux couteaux (6-6A, 6'-6A'), et qu'en position montée et en vue de dessus, lesdits supports (5 ; 5'; 5A ; 5A') sont disposés de façon qu'une droite (14, 14') passant par les deux points de liaison des deux couteaux (6-6A, 6'-6A') d'un support (5, 5') forme un angle au moins sensiblement droit avec une droite (15, 15') passant par les deux points de liaison des deux couteaux (6-6A, 6'-6A') de l'autre support (5A, 5A').

12. Dispositif selon la revendication 11, caractérisé en ce que les couteaux (6-6A, 6'-6A') du support supérieur (5A, 5A') sont situés au-dessus des couteaux de fauche (8, 8') du disque de fauche (7, 7') correspondant.

13. Dispositif selon l'une au moins des revendications 1 à 12, caractérisé en ce qu'en position montée et en vue de dessus, les couteaux (6-6A) d'un support (5, 5A) sont décalés angulairement par rapport aux couteaux (6'-6A') d'un support (5', 5A') voisin.

14. Dispositif selon l'une au moins des revendications 1 à 13, caractérisé en ce que les supports (5 ; 5'; 5A ; 5A') sont semblables aux disques de fauche (7, 7').

15. Dispositif selon l'une au moins des revendications 1 à 14, caractérisé en ce que les supports (5 ; 5'; 5A ; 5A') sont centrés par rapport aux disques de fauche (7, 7') correspondants.

16. Dispositif selon l'une au moins des revendications 1 à 15, caractérisé en ce que les couteaux (6-6A, 6'-6A') sont montés dans des chapes prévues sur les supports (5 ; 5'; 5A ; 5A') correspondants par l'intermédiaire d'articulations (23, 23').

17. Dispositif selon la revendication 16, caractérisé en ce que chaque articulation (23, 23') comporte :
- une entretoise (24 ; 24') qui s'étend d'une part entre les deux ailes de la chape et d'autre part au travers de trous prévus dans les couteaux (6-6A, 6'-6A'), sa longueur étant quelque peu plus grande que la largeur des deux couteaux (6-6A, 6'-6A');
- un boulon (9, 9') qui s'étend au travers des trous prévus dans les ailes de la chape et de l'entretoise (24 ; 24').

18. Dispositif selon la revendication 17, caractérisé en ce que chaque articulation (23, 23') lie un ou plusieurs couteaux (6-6A, 6'-6A') au support (5 ; 5'; 5A; 5A') correspondant.

19. Dispositif selon la revendication 18, caractérisé en ce qu'à chaque articulation (23 ; 23') sont associés deux couteaux (6-6A ; 6'-6A') coudés, adossés l'un à l'autre de façon à former un "Y".

20. Dispositif selon l'une au moins des revendications 1 à 19, caractérisé en ce que le capot (31 ; 31A) comporte une tôle déflectrice (28 ; 28A) comprenant une première surface (34 ; 34A) sensiblement horizontale et plane, située au-dessus des organes de hachage et/ou de broyage (2, 2' ; 2A, 2A') et au bord avant (35) de laquelle est raccordée une deuxième surface (36) qui s'étend vers l'avant et vers le haut, tandis qu'au bord arrière (37 ; 37A) de ladite première surface (34 ; 34A) est raccordée une troisième surface (38 ; 38A) s'étendant vers le bas.

21. Dispositif selon la revendication 20, caractérisé en ce qu'en position montée, le bord avant (35) de la première surface (34 ; 34A) est situé quelque peu en avant de l'axe de rotation (3, 3') des organes de broyage (2, 2'; 2A, 2A').

22. Dispositif selon l'une au moins des revendications 1 à 21, caractérisé en ce qu'il est prévu au moins un élément de retenue (52) destiné à freiner les végétaux.

23. Dispositif selon la revendication 22 et la revendication 20 ou 21, caractérisé en ce que chaque élément de retenue (52) :
- est en vue orthogonale à la direction d'avance (A) lors du travail, fixé à la première surface (34; 34A) entre le bord avant (35) de celle-ci et les axes de rotation (3 ; 3') des organes de hachage et/ou de broyage (2, 2'; 2A, 2A') correspondants, et en vue suivant la direction d'avance (A) lors du travail, au moins sensiblement dans la partie médiane entre lesdits axes de rotation (3, 3') desdits organes de hachage et/ou de broyage (2, 2'; 2A, 2A') correspondants,
- s'étend à partir de son point de fixation à la première surface (34; 34A) vers l'arrière et vers le bas.

24. Dispositif selon la revendication 22 ou 23, caractérisé en ce que ledit élément de retenue (52) est constitué par un fer plat.

25. Dispositif selon l'une au moins des revendications 20 à 24, caractérisé en ce qu'en position montée, le bord avant (17) de la deuxième surface (36) s'étend approximativement au-dessus de la partie frontale de la surface circulaire de diamètre (D, D') balayée par les couteaux de fauche (8, 8').

26. Dispositif selon l'une au moins des revendications 20 à 25, caractérisé en ce qu'en position montée, le bord arrière (37 ; 37A) de la première surface (34; 34A) est situé approximativement au-dessus de la partie arrière de la surface circulaire de diamètre (D, D') balayée par les couteaux de fauche (8, 8').

27. Dispositif selon l'une au moins des revendications 20 à 26, caractérisé en ce que la distance verticale (33) entre la première surface (34) et les organes de hachage et/ou de broyage (2, 2') est réglable.

28. Dispositif selon l'une au moins des revendications 20 à 27, caractérisé en ce que l'angle (Ω) que forme la troisième surface (38) avec la première surface (34) est réglable.

29. Dispositif selon l'une au moins des revendications 20 à 28, caractérisé en ce que la distance verticale (48) entre le bord inférieur (40) de la troisième surface (38) et la surface balayée par les couteaux de fauche (8, 8') des disques de fauche (7, 7') est réglable.

30. Dispositif selon l'une au moins des revendications 20 à 29, caractérisé en ce que la distance longitudinale (49) (suivant la direction d'avance (A) au travail) entre le bord inférieur (40) de la troisième surface (38) et la partie arrière de la surface circulaire de diamètre (D, D') balayée par les couteaux de fauche (8, 8') des disques de fauche (7, 7') est réglable.

31. Dispositif selon l'une au moins des revendications 20 à 30, caractérisé en ce que le bord inférieur (40) de la troisième surface (38 ; 38A) est situé plus haut que les couteaux de fauche (8, 8') et, compte tenu du sens d'avance (A) au travail, en arrière de la partie arrière de la surface circulaire de diamètre (D, D') balayée par lesdits couteaux de fauche (8, 8').

32. Dispositif selon l'une au moins des revendications 1 à 31, caractérisé en ce qu'il comporte un moyen de rehaussement (57) destiné à être implanté sous la barre à disques (1).

33. Machine de coupe munie d'une barre à disques (1), laquelle comprend une pluralité d'éléments de fauche (7-8, 7'-8') tournant chacun autour d'un axe (3, 3') respectif dirigé vers le haut au cours du travail (de préférence sensiblement vertical) et disposés l'un à côté de l'autre suivant une ligne (4) transversale par rapport à la direction d'avance (A) lors du travail, chaque élément de fauche étant composé d'un disque de fauche (7, 7') et de couteaux de fauche (8, 8') liés audit disque de fauche (7, 7'), caractérisée en ce qu'elle est équipée d'un dispositif selon l'une des revendications 1 à 32.

34. Machine de coupe selon la revendication 33, caractérisée en ce que les organes de hachage et/ou de broyage (2, 2' ; 2A, 2A') sont entraînés de manière synchronisée.
